**Europäisches Patentamt**

**European Patent Office**

**Office européen des brevets**

(19)

(11) Numéro de publication : **0 487 043 B1**

(12)

# FASCICULE DE BREVET EUROPEEN

(45) Date de publication du fascicule du brevet :
05.10.94 Bulletin 94/40

(51) Int. Cl.⁵ : **H01F 7/22,** H01R 4/68,
H02G 15/34

(21) Numéro de dépôt : **91119751.5**

(22) Date de dépôt : **19.11.91**

(54) **Procédé de refroidissement d'une amenée de courant pour appareillage électrique à très basse température et dispositif pour sa mise en oeuvre.**

(30) Priorité : **20.11.90 FR 9014457**

(43) Date de publication de la demande :
**27.05.92 Bulletin 92/22**

(45) Mention de la délivrance du brevet :
**05.10.94 Bulletin 94/40**

(84) Etats contractants désignés :
**CH DE FR GB IT LI SE**

(56) Documents cités :
**EP-A- 0 121 194
US-A- 3 522 361
US-A- 4 209 658**

(73) Titulaire : **GEC ALSTHOM SA**
**38, avenue Kléber**
**F-75116 Paris (FR)**

(72) Inventeur : **Kermarrec, Jean-Claude**
**73bis, rue Lavoisier**
**F-78140 Velizy-Villacoublay (FR)**

(74) Mandataire : **Weinmiller, Jürgen et al**
**Lennéstrasse 9**
**Postfach 24**
**D-82336 Feldafing (DE)**

## Description

La présente invention concerne un procédé de refroidissement d'une amenée de courant entre une borne à température ambiante et un appareillage électrique fonctionnant à très basse température et à intensité de courant variable. Selon ce procédé on réalise un échange de chaleur entre l'amenée de courant et un fluide auxiliaire de refroidissement. L'injection de ce fluide auxiliaire, à température ambiante, se fait à un niveau situé entre la borne à température ambiante et l'appareillage électrique. La sortie de ce fluide se trouve sur la borne à température ambiante. L'invention s'étend en outre à un dispositif de mise en oeuvre de ce procédé.

Elle s'applique en particulier au refroidissement d'appareillages supraconducteurs, notamment de machines supraconductrices, soumis à des périodes de fonctionnement à vide ou à courant faible, au régime nominal et en surrégime (intensité supérieure à l'intensité nominale).

Ces amenées de courant assurent la liaison électrique entre un circuit extérieur fonctionnant dans un milieu à température ambiante et l'appareillage électrique à très basse température, par exemple plongé dans l'hélium liquide à 4,2K ou dans l'azote liquide à 77K. Elles sont le siège de pertes par effet Joule et par conduction thermique ; ces pertes se traduisent par une dépense de liquéfaction-réfrigération supplémentaire par rapport à celle correspondant au maintien en froid de l'appareillage à très basse température.

Il est connu que le bilan des besoins de liquéfaction-réfrigération (bilan cryogénique) est amélioré lorsque les amenées de courant sont refroidies par échange de chaleur avec un fluide injecté à leur contact au niveau basse température, fluide évacué au niveau à température ambiante, puis refroidi par la machine cryogénique assurant le maintien en froid. Il s'agit le plus souvent du fluide cryogénique vaporisé par l'amenée de courant elle-même, que l'on dit alors "auto-refroidie". Dans ces conditions, il est également connu que les pertes calorifiques pour une intensité de courant I donnée sont minimales lorsque le rapport

$$r = \frac{I\,L}{S}$$

(L et S désignant la longueur et la section droite du conducteur) a une valeur optimale $r_{opt}$ ne dépendant que de la nature du matériau conducteur. Dans le cas d'une amenée de courant dont la section droite S (1) n'est plus constante dans toute la longueur du conducteur, on obtient une loi analogue avec :

$$r = I \int_{o}^{L} \frac{d\,l}{S(l)}$$

La définition de l'amenée de courant présentant les pertes minimales dépend donc de l'intensité I de courant qui la parcourt. En particulier, une amenée de courant optimisée pour un courant $I_1$ donné présente à vide des pertes non négligeables (environ 50% des pertes en charge) et peut même être détruite en cas de surcharge, pour une intensité variant de 1,05 $I_1$ à 3 $I_1$, suivant sa structure et le matériau conducteur utilisé.

Il y a donc avantage à modifier l'amenée de courant en fonction du courant I qui doit la traverser, de façon à maintenir le rapport r ci-dessus aussi proche que possible de la valeur $r_{opt}$.

On a proposé en premier lieu un débrochage mécanique de l'amenée de courant lors des arrêts de l'appareillage électrique. Il permet de réduire considérablement les pertes à vide, mais crée des problèmes de fiabilité et de résistance électrique du contact, et nécessite en cas d'automatisation un asservissement complexe et la présence d'un espace de débattement suffisant. L'amenée de courant n'est alors optimisée que pour une seule valeur de courant, sauf si elle est décomposée en plusieurs éléments individuellement débrochables et isolés thermiquement les uns des autres, ce qui entraîne une installation très complexe.

On a aussi proposé que le contact électrique soit déplaçable entre un conducteur surdimensionné, à température proche de l'ambiante et l'amenée de courant proprement dite (contact dit "glissant"), de façon à faire varier la longueur utile L de sorte que sa valeur reste proche du produit $\frac{r_{opt}.S}{I}$. Cette solution crée des problèmes de fiabilité, de résistance électrique et de défauts d'étanchéité. Elle nécessite un espace de débattement important au-dessus du cryostat, ainsi que des conducteurs souples ou articulés, de sorte qu'elle n'est guère envisageable en espace confiné.

Il a enfin été proposé dans le document US-A-4 209 658 un procédé d'optimisation d'une amenée de courant, dans lequel on déplace le point de cette amenée maintenu à la température ambiante en faisant coulisser dans un alésage interne à l'amenée un piston délimitant le point extrême auquel peut parvenir de l'eau de refroidissement introduite dans cet alésage, de façon à faire varier la longueur de l'amenée de courant au-dessous de la température ambiante en sens inverse de l'intensité du courant. Un tel procédé présente les mêmes inconvénients que ceux indiqués ci-dessus, sauf celui de la résistance électrique de contact.

La présente invention a pour but d'assurer l'optimisation de l'amenée de courant pour plusieurs valeurs de l'intensité, par exemple une valeur nulle ou faible (marche à vide de l'appareillage électrique à très basse température), une valeur correspondant au fonctionnement nominal et une valeur correspondant à une surcharge temporaire de cet appareillage électrique (démarrage).

L'invention a donc pour un objet un procédé de refroidissement auxiliaire d'une amenée de courant entre une borne à température ambiante et un appareillage électrique plongé dans un fluide cryogénique, l'appareillage devant fonctionner sous une intensité de courant variable, le refroidissement étant obtenu par circulation d'un fluide auxiliaire de refroidissement à température ambiante en échange de chaleur avec l'amenée de courant, caractérisé en ce que l'on introduit le fluide auxiliaire de refroidissement à un niveau intermédiaire de l'amenée de courant lorsque l'intensité du courant atteint une valeur nominale, et en ce que l'on introduit, lorsque cette valeur nominale est dépassée, tout ou partie du fluide auxiliaire de refroidissement à d'autres niveaux, d'autant plus proches de l'appareillage électrique que le dépassement de ladite valeur est plus important.

L'invention a encore pour objet un dispositif de refroidissement d'une amenée de courant selon le procédé ci-dessus, comprenant une première enceinte entourant l'amenée de courant et délimitant un premier canal de circulation du fluide auxiliaire de refroidissement en contact thermique avec l'amenée de courant, et des moyens pour admettre dans le premier canal de circulation à un niveau choisi en fonction de l'intensité du courant parmi deux ou plusieurs niveaux possibles, tout ou partie dudit fluide de refroidissement.

L'invention a enfin pour objet un dispositif de refroidissement d'une amenée de courant selon le procédé ci-dessus, caractérisé en ce qu'il comprend un échangeur de chaleur à la température ambiante des vapeurs du fluide cryogénique après leur réchauffage en échange de chaleur avec l'amenée de courant, et des moyens de réintroduction des vapeurs de ce fluide en contact direct avec le conducteur de l'amenée de courant, à un niveau choisi en fonction de l'intensité de courant parmi deux ou plusieurs niveaux possibles.

Il est décrit ci-après, à titre d'exemples et en référence aux figures du dessin annexé, des procédés et dispositifs de refroidissement d'amenées de courant pour appareillage électrique supraconducteur d'une motrice ferroviaire, fonctionnant dans un bain de fluide cryogénique.

La figure 1 représente en élévation et coupe diamétrale un dispositif dans lequel le fluide auxiliaire de refroidissement est de l'air à la température ambiante.

La figure 2 est une coupe transversale selon l'axe II-II de la figure 1.

La figure 3 est une coupe transversale selon l'axe III-III de la figure 1.

La figure 4 est un jeu de courbes représentant en fonction de l'intensité les consommations cryogéniques d'une amenée de courant refroidie par l'air ambiant, suivant les zones de l'amenée de courant refroidies.

La figure 5 représente en coupe diamétrale un dispositif dans lequel le fluide de refroidissement est du fluide cryogénique gazeux préalablement réchauffé par échange de chaleur avec l'amenée de courant, puis refroidi par échange de chaleur avec l'air ambiant.

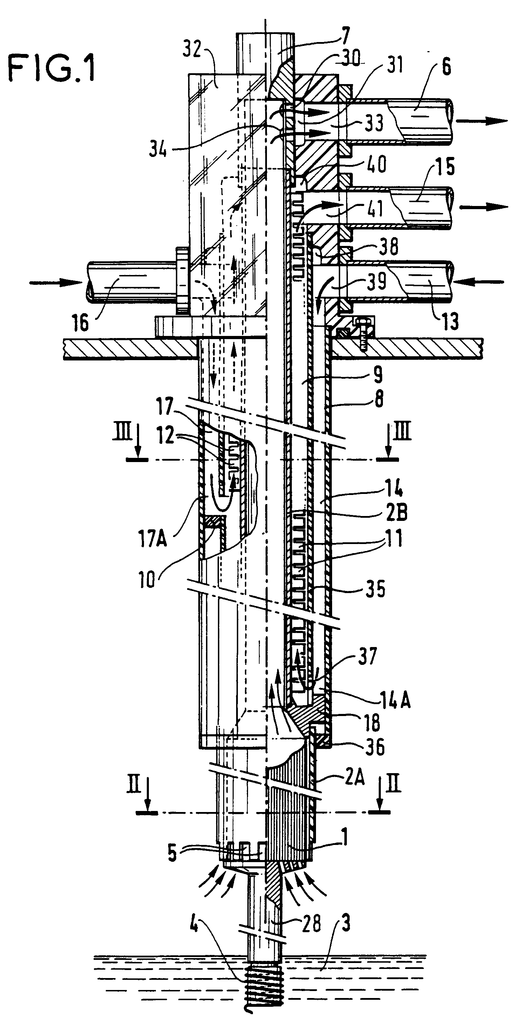

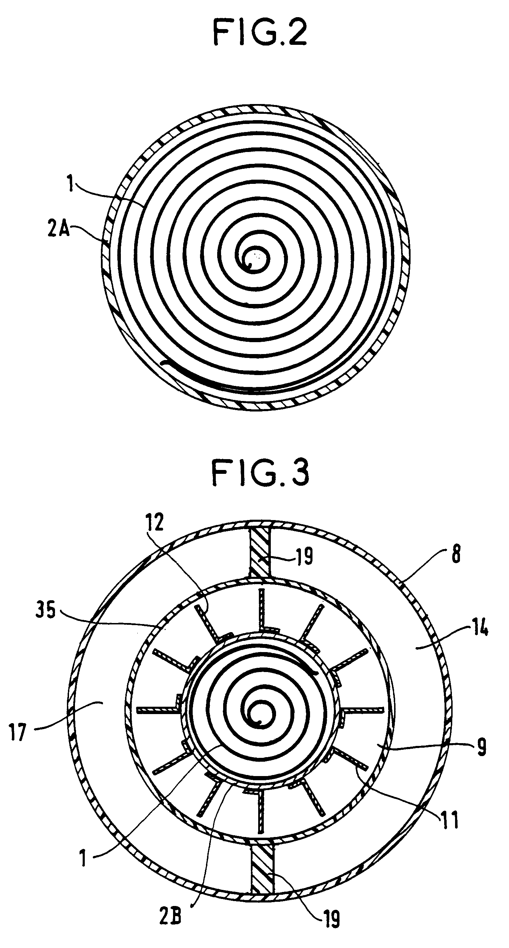

Dans les figures 1 à 3, le conducteur 1 de l'amenée de courant est constitué par un feuillard mince spiralé présentant une grande surface développée, en laiton ou en un matériau présentant à basse température une résistivité électrique du même ordre (environ $3.10^{-8}$ ohm.m). Avant sa mise en forme, le feuillard se présente comme une feuille en forme de L dont la branche horizontale possède un côté supérieur oblique, ce qui confère au feuillard spiralé la forme représentée à la figure 1.

Le feuillard est contenu dans un tube étanche composé de deux parties 2A et 2B et à l'intérieur duquel peuvent circuler les vapeurs du fluide cryogénique résultant de la vaporisation créée à la surface du bain de fluide cryogénique 3 par les pertes calorifiques de l'amenée de courant, de l'appareil électrique (non représenté) relié à l'amenée de courant par le fil supraconducteur 4, et des autres éléments de l'installation cryogénique. Ces vapeurs pénètrent dans le tube 2A par les ouvertures 5 pratiquées à sa périphérie inférieure. A cet effet, la brasure permettant la liaison entre le conducteur 1 et la pièce conductrice massive 28, sur laquelle est soudé le fil 4, ne doit pas obstruer l'extrémité inférieure du feuillard.

Le tube 2A est par exemple en verre époxy. Le tube 2B est en un métal bon conducteur de la chaleur. Une rondelle métallique 18, en cuivre par exemple, assure la continuité entre les parties 2A et 2B et est brasée sur la partie intermédiaire du feuillard pour assurer une reprise du contact électrique à ce niveau.

L'amenée de courant comprend à sa partie supérieure une borne de connexion 7 possédant un trou borgne axial au fond duquel est brasée l'extrémité supérieure du feuillard 1 afin d'assurer la continuité électrique. La paroi du trou borgne de la borne 7 est percée de trous 30 débouchant dans une chambre annulaire 31 formée dans la tête 32 de l'amenée de courant. La tête 32, qui peut être en résine époxy, est également pourvue d'un orifice 33 reliant la chambre annulaire 31 à un conduit 6 fixé sur la tête. Le feuillard possède, dans sa partie engagée dans la borne 7, des trous 34 percés radialement. L'intérieur du feuillard est donc en communication avec le conduit 6 par l'intermédiaire des trous 34 et 30, de la chambre annulaire 31 et de l'orifice 33. La partie basse du feuillard, c'est-à-dire la partie correspondant à l'élément 2A du tube étanche, est également percée de trous pour que les vapeurs du fluide cryogénique puissent circuler jusqu'à l'intérieur du feuillard.

La tête 32 permet la fixation de l'amenée de courant sur la cuve contenant le fluide cryogénique et l'appareillage électrique à relier, et permet également le maintien de la borne 7 par des moyens non représentés.

Les vapeurs de fluide cryogénique, réchauffées à température voisine de l'ambiante en échange de chaleur avec le conducteur 1, sont évacuées ou renvoyées à un liquéfacteur par le conduit 6. L'extrémité chaude de l'amenée de courant est reliée au circuit électrique à température ambiante par la borne de connexion à température ambiante et de faibles résistances électrique et thermique 7.

Le tube étanche 2B est entouré d'une enceinte isolante 35, par exemple en époxy, afin de constituer un canal de refroidissement 9 dans lequel sont disposées de préférence des ailettes 11, 12 fixées sur le tube 2B et améliorant les échanges thermiques. Ces ailettes, réalisées en métal bon conducteur thermique comme le cuivre, peuvent être soudées sur le tube métallique 2B.

Une enceinte isolante externe 8, fixée à sa partie supérieure sur la tête 32 par exemple par collage, enveloppe l'amenée de courant jusqu'au niveau de la rondelle métallique 18. L'enceinte 8 est collée à sa partie basse au tube 2A par un joint de colle torique 36, en araldite ou en résine époxy. Le tube 2A et les enceintes 8 et 35 ont avec la rondelle 18 des surfaces communes du type glissant juste ce qui assure une bonne étanchéité et permet aux parties métalliques de se dilater ou de se contracter sans problème par rapport aux parties isolantes.

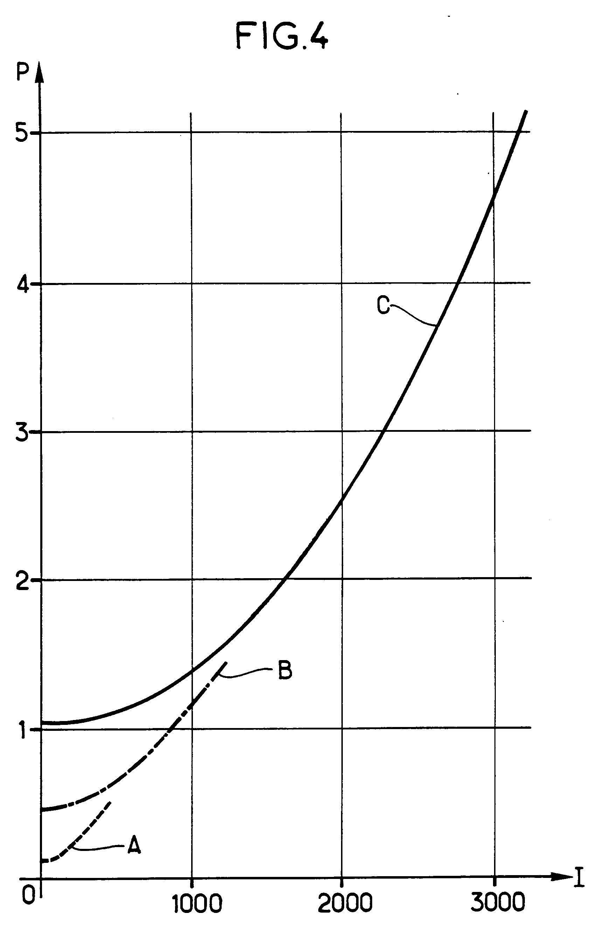

Les enceintes 8 et 35 délimitent un espace annulaire qui est séparé en deux canaux 14 et 17 grâce à des cloisons longitudinales 19 visibles sur la figure 3. Ces cloisons 19 sont présentes sur toute la longueur de l'enceinte 35. Cette enceinte 35 possèdant des ouvertures périphériques 37 en partie basse, les canaux 9 et 14 communiquent à ce niveau.

Le canal 14 est relié à une tubulure d'entrée 13 d'air déshydraté à température peu supérieure à l'ambiante ou d'un autre fluide tel que de l'azote. La tubulure 13 est fixée sur la tête 32 qui possède une chambre 38 de communication avec le canal 14 prolongée par un orifice 39 vers la tubulure 13. Le canal 9, relié en partie basse au canal 14, est destiné à assurer le refroidissement de l'amenée de courant lorsque l'intensité qui la parcourt est élevée.

La tubulure de sortie 15 est reliée au canal 9 par l'intermédiaire de la chambre annulaire 40 et de l'orifice 41 usinés dans la tête 32.

En cas d'intensité élevée et comme il est indiqué par les flèches sur la figure 1, l'air ou le fluide de refroidissement descend dans le canal 14 jusqu'à un premier niveau 14A, remonte par le canal 9 le long des ailettes, puis sort par la tubulure 15 pour être soit évacué, soit recyclé après échange de chaleur avec le milieu ambiant.

Le canal 17 est relié à une tubulure d'entrée 16 d'air deshydraté (ou d'un autre fluide) à température peu supérieure à l'ambiante. Cet air est destiné à assurer le refroidissement de l'amenée de courant lorsqu'elle est parcourue par l'intensité nominale. Du côté du canal 17, l'enceinte 35 est interrompue au niveau 17A. Comme indiqué par les flèches, le fluide de refroidissement descend dans le canal 17 jusqu'au second niveau 17A plus élevé que le premier, remonte par le canal 9 au contact des ailettes 12, puis sort par la tubulure 15 pour être soit évacué, soit recyclé.

L'interruption du canal 17 peut être réalisée au moyen d'une cloison transversale 10 en forme de demi-couronne.

Comme représenté, la section droite du conducteur est de préférence plus importante dans la zone proche du milieu à très basse température (2A) que dans la zone plus éloignée (2B).

La figure 4 représente pour une amenée de courant de longueur 1,2m et de diamètre extérieur 100mm, telle que celle des figures 1 à 3, destinée à être parcourue par des intensités entre 0 et 3 000 ampères et dans le cas où le fluide cryogénique est de l'hélium, les pertes thermiques P observées (exprimées en watts à 4,2K) en fonction de l'intensité I circulant dans l'amenée de courant :

a) sans refroidissement par un circuit d'air auxiliaire (courbe A). La consommation est de 0,12 watts à 4,2K pour une intensité nulle ;

b) avec refroidissement par le seul circuit d'air auxiliaire 16 - 17 - 9 - 15, dans le cas du passage dans l'amenée de courant de l'intensité nominale (courbe B). La consommation est de 1,17 watts à 4,2K pour une intensité de 1 000 ampères ;

c) avec refroidissement sur toute la hauteur de l'enceinte entourant l'amenée de courant, par les deux circuits d'air auxiliaire 13 - 14 - 9 - 15 et 16 - 17 - 9 - 15, dans le cas du passage dans l'amenée de courant d'une intensité plus élevée que l'intensité nominale (courbe C). La consommation est de 2,58 watts à 4,2K pour une intensité de 2 000 ampères.

A titre de comparaison, une amenée de courant connue, dimensionnée pour pouvoir transmettre 2 000 ampères, ne comportant pas d'enceintes de circulation d'un fluide de refroidissement auxiliaire, présente des pertes à vide d'environ 1,2 watts à 4,2K, soit dix fois plus qu'une amenée de courant selon l'invention.

Lorsque l'échange de chaleur entre le fluide de refroidissement auxiliaire et l'amenée de courant est satisfaisant, les pertes thermiques par effet Joule dans la section refroidie par ce fluide auxiliaire n'ont pas d'incidence sur la consommation de maintien en froid à très basse température, et sont très faibles. La consommation d'énergie correspondant à la mise en circulation du fluide auxiliaire est également très faible.

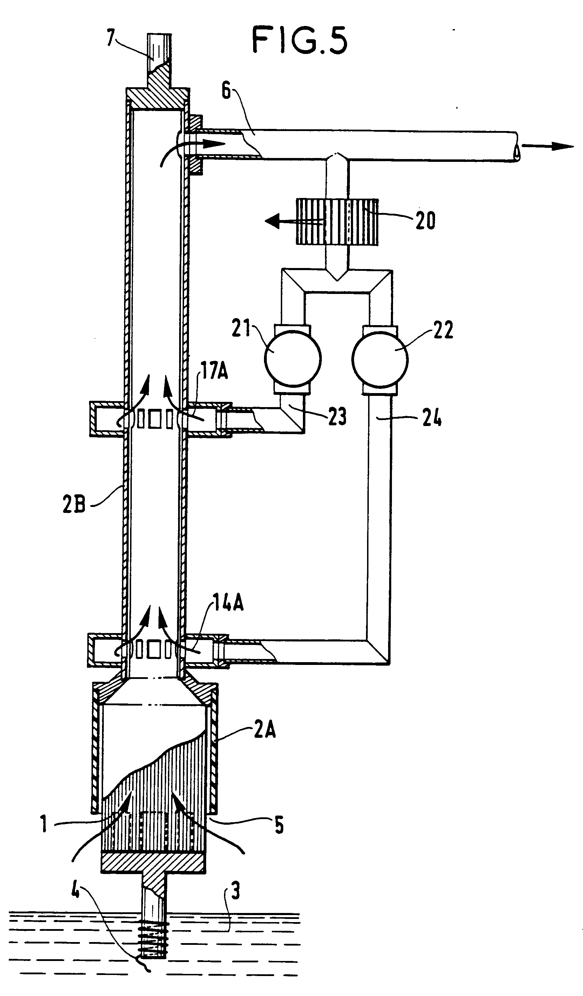

Dans la variante représentée en figure 5, on utilise comme gaz de refroidissement les vapeurs de fluide cryogénique dégagées du bain 3, après leur réchauffage un peu au-dessus de la température ambiante en échange de chaleur avec l'amenée de courant. Ces vapeurs sont refroidies à la température ambiante dans un échangeur 20 refroidi à l'air, puis recyclées à l'aide de circulateurs 21, 22 par les conduits 23, 24.

Dans ce cas, il n'est plus nécessaire de disposer autour de l'amenée de courant des canaux de circulation du gaz auxiliaire, le fluide cryogénique recyclé pouvant s'écouler avec les vapeurs issues du bain de liquide à l'intérieur du tube étanche contenant le conducteur.

Le procédé selon l'invention consiste donc à choisir en fonction de l'intensité circulant dans l'amenée de courant le niveau auquel le fluide auxiliaire de refroidissement est amené en échange de chaleur avec le conducteur. En effet, la partie de l'amenée de courant située au-dessus du niveau d'introduction du fluide auxiliaire de refroidissement est approximativement à la température ambiante, pourvu que le débit de ce fluide et son coefficient d'échange de chaleur avec le conducteur soient suffisants. La transition entre la température ambiante et le bain à très basse température est ainsi assurée par la partie de l'amenée de courant située sous le niveau d'introduction du fluide auxiliaire de refroidissement. On doit optimiser la longueur $L_i$ de cette partie de l'amenée de courant en fonction de l'intensité $I_i$ de façon à obtenir la résistance optimale :

$$r_{opt} = I_i \int_{o}^{L_i} \frac{dl}{S(1)}$$

Les résultats restent cependant assez bons tant que l'intensité I ne diffère pas trop de la valeur optimale $I_i$, pour les matériaux dont la résistivité électrique dépend peu de la température, tels que le laiton et certains alliages, à l'exclusion des métaux très purs.

Par exemple, dans les cas des figures 1 à 5, l'amenée de courant est optimisée par trois valeurs $I_o$, $I_1$, $I_2$ de l'intensité qui la parcourt, suivant qu'il n'y a aucune circulation de fluide auxiliaire de refroidissement, que ce fluide circule à partir du niveau 17A ou à partir du niveau 14A. A vide, en l'absence de refroidissement par le fluide auxiliaire, les pertes calorifiques sont réduites à celles d'une amenée de courant optimisée pour le courant à vide $I_o$, ou moins, si l'on effectue en outre un débrochage mécanique.

**Revendications**

1. Procédé de refroidissement auxiliaire d'une amenée de courant entre une borne à température ambiante (7) et un appareillage électrique plongé dans un fluide cryogénique, l'appareillage devant fonctionner sous une intensité de courant variable, le refroidissement étant obtenu par circulation d'un fluide auxiliaire de refroidissement à température ambiante en échange de chaleur avec l'amenée de courant, caractérisé en ce que l'on introduit le fluide auxiliaire de refroidissement à un niveau intermédiaire (17A) de l'amenée de courant lorsque l'intensité du courant, atteint une valeur nominale, et en ce que l'on introduit, lorsque cette valeur nominale est dépassée, tout ou partie du fluide auxiliaire de refroidissement à d'autres niveaux (14A), d'autant plus proches de l'appareillage électrique que le dépassement de ladite valeur est plus important.

2. Procédé selon la revendication 1, caractérisé en ce qu'en régime correspondant au passage d'une intensité élevée dans l'amenée de courant on introduit également une partie du fluide auxiliaire de refroidissement à un niveau (17A) correspondant au passage dans l'amenée de courant d'une intensité réduite.

3. Procédé selon les revendications 1 ou 2, caractérisé en ce que le fluide auxiliaire de refroidissement est de l'air.

4. Procédé selon les revendications 1 ou 2, caractérisé en ce que le fluide auxiliaire de refroidissement est constitué par les vapeurs du fluide cryogénique récupérées par l'amenée de courant et recyclées après échange thermique avec le milieu ambiant.

5. Dispositif de refroidissement d'une amenée de courant pour la mise en oeuvre du procédé selon la revendication 1, comprenant une première enceinte (35) entourant l'amenée de courant et délimitant un premier canal de circulation (9) du fluide auxiliaire de refroidissement en contact thermique avec l'amenée de courant, et des moyens (16, 17, 17A, 13, 14, 14A) pour admettre dans le premier canal de circulation (9) à un niveau choisi en fonction de l'intensité du courant parmi deux ou plusieurs niveaux possibles (17A, 14A), tout ou partie dudit fluide de refroidissement.

6. Dispositif selon la revendication 5, caractérisé en ce qu'il comporte des moyens (11, 12) d'augmentation du coefficient d'échange de chaleur entre l'amenée de courant et le fluide auxiliaire de refroidissement.

7. Dispositif selon l'une des revendications 5 ou 6, caractérisé en qu'il comprend une deuxième enceinte (8) entourant la première enceinte (35) pour constituer un espace de circulation du fluide auxiliaire de refroidissement, cet espace étant séparé en un deuxième canal (14) et un troisième canal (17) qui ont chacun un accès au premier canal (9) selon des niveaux différents (14A, 17A).

8. Dispositif de refroidissement d'une amenée de courant selon le procédé de la revendication 1, caractérisé en ce qu'il comprend un échangeur (20) de chaleur à la température ambiante des vapeurs du fluide cryogénique après leur réchauffage en échange de chaleur avec l'amenée de courant, et des moyens (21, 23 ; 22, 24) de réintroduction des vapeurs de ce fluide en contact direct avec le conducteur de l'amenée de courant, à un niveau choisi en fonction de l'intensité de courant parmi deux ou plusieurs niveaux possibles (17A, 14A).

**Patentansprüche**

1. Verfahren zur Hilfskühlung einer Stromzuführung zwischen einer Klemme bei Umgebungstemperatur (7) und einem elektrischen Gerät, das in ein Kryo-Fluid getaucht ist und bei variabler Stromstärke betrieben wird, wobei die Kühlung durch Umlauf eines Hilfskühlfluids bei Umgebungstemperatur in Wärmeaustausch mit der Stromzuführung erfolgt, dadurch gekennzeichnet, daß das Hilfskühlfluid auf einem Zwischenniveau (17A) der Stromzuführung eingespeist wird, wenn die Stromstärke einen Nennwert erreicht, und daß bei Überschreitung dieses Nennwerts ein Teil des Hilfskühlfluids oder das ganze Hilfskühlfluid bei anderen Niveaus (14A) eingespeist wird, die umso näher beim elektrischen Gerät liegen, je stärker dieser Nennwert überschritten wird.

2. Verfahren nach Anspruch 1, dadurch gekennzeichnet, daß bei einem Betrieb mit sehr großer Stromstärke in der Stromzuführung auch ein Teil des Hilfskühlfluids bei einem Niveau (17A) eingespeist wird, das einer geringeren Stromstärke in der Stromzuführung entspricht.

3. Verfahren nach Anspruch 1 oder 2, dadurch gekennzeichnet, daß das Hilfskühlfluid Luft ist.

4. Verfahren nach Anspruch 1 oder 2, dadurch gekennzeichnet, daß das Hilfskühlfluid aus den Dämpfen des Kryo-Fluids besteht, die an der Stromzuführung vorbeiströmen und nach Wärmeaustausch mit dem Umgebungsmilieu zurückgespeist werden.

5. Kühlvorrichtung für eine Stromzuführung zur Durchführung des Verfahrens nach Anspruch 1 mit einer ersten Hülle (35), die die Stromzuführung umgibt und einen ersten Strömungskanal (9) für das Hilfskühlfluid in Wärmekontakt mit der Stromzuführung begrenzt, und mit Mitteln (16, 17, 17A, 13, 14, 14A), um einen Teil oder das ganze Kühlfluid in den ersten Strömungskanal (9) bei einem Niveau einzuspeisen, das abhängig von der Stromstärke unter zwei oder mehr möglichen Niveaus (17A, 14A) ausgewählt wird.

6. Vorrichtung nach Anspruch 5, dadurch gekennzeichnet, daß sie Mittel (11, 12) zur Erhöhung des Wärmeaustauschkoeffizienten zwischen der Stromzuführung und dem Hilfskühlfluid besitzt.

7. Vorrichtung nach einem der Ansprüche 5 oder 6, dadurch gekennzeichnet, daß sie eine zweite Hülle (8) aufweist, die die erste Hülle (35) umgibt und einen Strömungsraum für das Hilfskühlfluid bildet, der in einen zweiten (14) und einen dritten Kanal (17) mit je einem Zugang zum ersten Kanal (9) bei unterschiedlichen Niveaus (14A, 17A) getrennt ist.

8. Vorrichtung zur Kühlung einer Stromzuführung nach dem Verfahren gemäß Anspruch 1, dadurch gekennzeichnet, daß sie einen Wärmetauscher (20) bei Umgebungstemperatur für die Dämpfe des Kryo-Fluids nach deren Erwärmung aufgrund des Wärmeaustauschs mit der Stromzuführung und Mittel (21, 23; 22, 24) zur Einspeisung der Dämpfe dieses Fluids in direktem Kontakt mit dem Leiter der Stromzuführung bei einem Niveau aufweist, das abhängig von der Stromstärke aus zwei oder mehr möglichen Niveaus (17A, 14A) ausgewählt wird.

**Claims**

1. Method of auxiliary cooling for a current feed between a terminal (7) at ambient temperature and an electrical equipment immersed in a cryogenic fluid, the equipment being adapted to operate at variable current, the cooling being obtained by circulating an auxiliary cooling fluid at ambient temperature exchanging heat with the current feed, characterised in that the auxiliary cooling fluid is introduced at an intermediate level (17A) of the current feed when the current reaches a nominal value and in that, if said nominal value is exceeded, some or all of the auxiliary cooling fluid is introduced at other levels nearer the electrical equipment in proportion to the amount by which said value is exceeded.

2. Method according to claim 1 characterised in that some of the auxiliary cooling fluid is additionally introduced at a level (17A) representing a reduced current in the current feed when the current feed is conveying a high current.

3. Method according to claim 1 or claim 2 characterised in that the auxiliary cooling fluid is air.

4. Method according to claim 1 or claim 2 characterised in that the auxiliary cooling fluid is cryogenic fluid vapour recovered by the current feed and recycled after exchanging heat with the surrounding environment.

5. Device for cooling a current feed for implementing the method according to claim 1 comprising a first enclosure (35) around the current feed and delimiting a first passage (9) for circulation of the auxiliary cooling fluid in thermal contact with the current feed and means (16, 17, 17A, 13, 14, 14A) for admitting all or some of said cooling fluid into the first passage (9) at a level selected according to the current from two or more possible levels.

6. Device according to claim 5 characterised in that it comprises means (11, 12) for increasing the rate of exchange of heat between the current feed and the auxiliary cooling fluid.

7. Device according to claim 5 or claim 6 characterised in that it further comprises a second enclosure (8) around the first enclosure (35) to constitute a space for circulating the auxiliary cooling fluid separated into a second passage (14) and a third passage (17) each of which has access to the first passage (9) at a different level (14A, 17A).

8. Device for cooling a current feed using the method of claim 1 characterised in that it comprises a heat-exchanger (20) for cooling to ambient temperature cryogenic fluid vapour heated by exchanging heat with the current feed and means (21, 23; 22, 24) for recirculating cryogenic fluid vapour in direct contact with the conductor of the current feed at a level chosen according to the current from two or more possible levels (14A, 17A).

FIG.1

# FIG.2

# FIG.3

# FIG.4

# FIG.5